# EUROPÄISCHE PATENTSCHRIFT

(11) **EP 2 855 563 B1**
(45) Veröffentlichungstag und Bekanntmachung des Hinweises auf die Patenterteilung: **14.03.2018**
(21) Anmeldenummer: 13719834.7
(22) Anmeldetag: 29.04.2013
(51) Int. Cl.: C08J 3/28, C09D 4/06, H01J 9/00

(54) **DIREKTE AUSHÄRTUNG VON REAKTIONSHARZEN DURCH PLASMAINDUKTION**
DIRECT CURING OF REACTIVE RESINS BY MEANS OF PLASMA INDUCTION
DURCISSEMENT DIRECT DE RÉSINES COMPOSITES PAR INDUCTION DE PLASMA

(30) Priorität: 25.05.2012 DE 102012208818
(43) Veröffentlichungstag der Anmeldung: 08.04.2015
(73) Patentinhaber: Evonik Röhm GmbH, 64293 Darmstadt (DE)
(72) Erfinder: STENNER, Patrik, 63452 Hanau (DE); SUHR, Silke, 63776 Mömbris (DE); KLEIN, Alexander, 55435 Gau-Algesheim (DE); HILF, Stefan, 109700 Singapore (SG)
(86) Internationale Anmeldenummer: PCT/EP2013/058878
(87) Internationale Veröffentlichungsnummer: WO 2013/174623

(56) Entgegenhaltungen:
- WO-A1-2006/046003
- WO-A1-2010/100051
- WO-A1-2012/146438
- DE-A1- 2 003 132
- DE-A1-102010 002 123
- US-A1- 2012 109 301

## Beschreibung

### Gebiet der Erfindung

Die vorliegende Erfindung umfasst ein neuartiges Verfahren zur Markierung oder Beschichtung von Flächen, wie beispielsweise Böden, Flachdächer, Balkone, Metallkonstruktionen sowie insbesondere von Fahrbahnen, wie beispielsweise Straßen. Dieses neuartige Verfahren zeichnet sich dadurch aus, dass es gegenüber dem Stand der Technik eine vereinfachte Auftragung von reaktionsharzgebundenen Beschichtungsmassen als Einkomponenten (1-K-System) ermöglicht und gleichzeitig ohne die bei diesen Systemen ansonsten notwendige Zugabe arbeitstechnisch kritischer Substanzen wie Peroxide als zweite Initiatorkomponente ausführbar ist. Im herkömmlichen Verfahren muss die reaktive Masse innerhalb der sog. Topfzeit verarbeitet sein, ansonsten setzt die Aushärtungsreaktion bereits im Gebinde, bzw. in der Spritzmaschine ein und führt zu Störungen. Dieses neue Verfahren zeichnet sich dadurch aus, dass ein Reaktionsharzsystem ohne Initiatorzugabe auf eine Fläche aufgetragen wird und anschließend mittels eines Plasmas ausgehärtet wird. Da die zu verwendete Apparatur zur Aufbringung der Straßenmarkierung möglichst einfach sein muss, wird als Radikalquelle ein sogenanntes Atmosphärendruckplasma eingesetzt.

Die Erfindung betrifft gleichzeitig eine Maschine zur Aushärtung einer solchen Beschichtung bzw. eine Maschine zur Auftragung und anschließenden Aushärtung der Beschichtung.

Das neuartige erfindungsgemäße Verfahren ist darüber hinaus in einem sehr breiten Temperaturspektrum schnell ausführbar und führt zu einer schnellen Wiederbefahrbarkeit zum Beispiel von markierten Straßenoberflächen.

### Stand der Technik

Methacrylatbasierte Reaktionsharze sind so genannte MOPO-Systeme, die unter anderem Monomere, Polymere und ein Initiatorsystem enthalten. Das Initiatorsystem setzt sich zumeist aus einem Initiator und einem getrennt, in Form eines 2-K-Systems gelagerten Beschleunigers zusammen. Diese finden beispielsweise Einsatz in reaktionsharzgebundenen Markierungsmassen, sog. Kaltplastiken oder 2-Komponenten Systemen für Straßenmarkierungen. Hier werden spezielle Maschinen, sogenannte 2-Komponenten Maschinen eingesetzt, um das Monomer-Polymer-Gemisch zusammen mit dem Starter als zweite Komponente zu vermischen und aufzutragen. Die Aushärtung von Monomeren erfolgt durch Zugabe eines Starters, insbesondere eines Initiators, bei dem es sich in der Regel um ein Peroxid handelt, zur reaktiven Kaltplastik, die den oder die Beschleuniger, insbesondere Amine enthält. Alternativ erfolgt die Initiierung durch Zugabe eines Vorgemisches aus Starter und einer an sich inaktiven, weil unbeschleunigten Kaltplastik, zu einer zweiten beschleunigten Kaltplastikkomponente.

Die Polymerisation findet dann bei modernen Reaktionsharzsystemen, die speziell für Spritzanwendungen formuliert sind, bei Raumtemperatur innerhalb von weniger als 10 min statt. Es entstehen duroplastische Markierungen mit hoher Abrasionsfestigkeit und hoher Wärmeformbeständigkeit, d.h. hoher Dauerhaftigkeit auch bei starker Verkehrsbelastung. Selbst bei kalter Witterung, z.B. unterhalb von 10°C, können reaktionsharzgebundene Systeme sicher zur Aushärtung gebracht werden. Durch zusätzliche Beschleunigerzugabe ist die Verarbeitung auf trockenen Oberflächen selbst unterhalb von 0°C möglich, was anderen Markierungsstofftechnologien nicht möglich ist.

Im Gegensatz zu wasserbasierten oder lösemittelbasierten Straßenmarkierungssystemen ist die Lebensdauer der auf Reaktionsharzen basierten Fahrbahnmarkierungen höher. Nachteilig bei diesen Systemen ist die komplexere Verarbeitung. Es müssen zwei Komponenten verarbeitet werden. Weiterhin muss mit Lösungsmitteln die Maschine gespült werden, um eine Aushärtung von Gemischresten aus reaktiver Kaltplastik und Starter in der Maschine, die zu Maschinenausfällen führt, zu vermeiden. Ist der Starter einmal in die reaktive Komponente eingemischt, muss dieses Gemisch binnen weniger Minuten (die so genannte Topfzeit) verarbeitet werden, ehe ein Viskositätsanstieg durch einsetzende Polymerisation z.B. die Auftragung auf eine Fläche oder das Einstreuen von Griffigkeitsmitteln unmöglich macht. Die verwendeten Beschleuniger, bei denen es sich in der Regel um Amine oder Aniline handelt, und Peroxide sind zumeist Gefahrstoffe und erfordern entsprechende Arbeitsschutzmaßnahmen bei der Handhabung. Auch hinsichtlich Transport und Lagerung ergeben sich Einschränkungen, so dürfen z.B. Initiatoren und Reaktionsharz nicht zusammen gelagert werden. Die Lagerstabilität der beschleunigten Reaktionsharzkomponente ist gegenüber der unbeschleunigten Komponente vermindert.

Die Verbesserung der Auftraggeschwindigkeit und der Temperaturabhängigkeit beim Aushärten von Reaktionsharzen, sowie deren mechanischen Eigenschaften sind schon längere Zeit Ziel der Entwicklung. Als Fahrbahnmarkierungsmaterialien werden zurzeit Systeme wie Lösungsmittel basierte Farben, Wasserfarben, thermoplastische Farben, Farben auf Basis von Reaktionsharzen sowie in geringerem Umfang auch vorgefertigte Klebebänder eingesetzt. Letztere haben den Nachteil, dass sie aufwendig herzustellen und zu applizieren sind.

An moderne Fahrbahnmarkierungsstoffe wird eine Reihe von Ansprüchen gestellt. Zum einen wird von solchen Systemen erwartet, dass sie eine einfache Applikation auf der Straßenoberfläche und gleichzeitig hohe Lagerstabilität, sowie eine lange Lebensdauer der Markierung mit sich bringen. Auch von Bedeutung sind eine schnelle Verarbeitbarkeit und insbesondere eine Verarbeitbarkeit in einem möglichst breiten Temperaturfenster. Viele Straßenmarkierungs- und Bodenbeschichtungssysteme nach Stand der Technik härten bei Temperaturen oberhalb von 40 °C zu unkontrolliert aus. Es kann zu Blasen- oder Hautbildungen, klebrigen Oberflächen und unvollständig gehärteten Bereichen kommen. Dies führt wiederum zu verminderten Haftungen und verkürzten Lebensdauern. Bei Temperaturen unterhalb von 10 °C ist eine Aushärtung dagegen sehr verlangsamt und frisch markierte Straßenabschnitte müssen für längere Zeit abgesperrt werden oder künstlich eine Temperierung der Markierungen vorgenommen werden.

Thermoplastische Überzüge, die im geschmolzenen Zustand auf der Fahrbahnoberfläche aufgebracht werden, können an sich auch auf eine hohe Aushärtungsgeschwindigkeit optimiert werden. Ihre Verwendung hat den großen Nachteil eines zusätzlichen Verfahrensschrittes, indem das Produkt erst, z.B. bei 200 °C zum Schmelzen gebracht werden muss, bevor es appliziert werden kann. Dies ist nicht nur wegen der hohen Temperatur potentiell gefährlich, sondern thermoplastische Systeme weisen an sich eine erhöhte Abriebsneigung und eine verminderte thermische Belastbarkeit auf.

Im Stand der Technik ist kein Reaktionsharz oder Beschichtungsmittel bekannt, dass nach der Applikation auf einer Oberfläche, insbesondere eine Straßenoberfläche mittels Plasma ausgehärtet wird. Plasmastrahlen sind zwar bei der Aushärtung von reinen Monomersystemen zur Beschichtung von Gegenständen bekannt. Diese Verfahren finden jedoch weder zur Beschichtung von Bodenflächen Anwendung, noch erfolgt die Aushärtung eines Reaktionsharzes. Vielmehr erfolgt eine Oberflächenbehhandlung gemäß WO 2008/060522 mit dem Plasma, bevor das Beschichtungsmittel aufgetragen wird, oder die Beschichtungszusammensetzung wird - wie in WO 2006/046003 - mit einem Plasma behandelt, bevor diese auf ein Substrat appliziert wird.

KR 2006 124 455 beschreibt ein Verfahren, bei eine Mischung aus Polymeren und Glaspartikeln, bevor sie mit einem Lack zu einer Straßenmarkierungsfarbe formuliert werden, mittels Plasma oberflächenbehandelt werden. Eine Aushärtung des Lackes erfolgt dagegen nach der Applikation konventionell, z.B. durch Abdampfen volatiler Bestandteile.

Gemäß RU 22 13 156 wird ein Material zur Pulverbeschichtung (powder coating) mittels Plasma aufgetragen und dadurch eine Filmbildung bewirkt. Eine Initiierung ist auch hier nicht beschrieben. Weiterhin erfolgt die eigentliche Applikation in einem Plasmastrahl. Eine nachträgliche Aushärtung ist hier nicht notwendig und auch nicht beschrieben.

### Aufgabe

Aufgabe der vorliegenden Erfindung ist die Bereitstellung eines neuen Verfahrens zum Aushärten von Reaktionsharzen, das gegenüber dem Stand der Technik einfacher durchzuführen ist.

Insbesondere war die Aufgabe der vorliegenden Erfindung, ein Verfahren zur Aushärtung von 1-K-Reaktionsharzen nach deren Applikation auf einer Bodenoberfläche zur Verfügung zu stellen. Darüber hinaus soll das verfahrensgemäß ausgehärtete Reaktionsharz über eine hohe Dauerhaftigkeit z.B. als Fahrbahnmarkierung verfügen und als solche schnell, d.h. bei Raumtemperatur spätestens nach etwa 10 min wieder überrollbar sein.

Weiterhin soll das Verfahren, welches als Aufgabe gestellt wurde, ohne Trocknung durch Lösungsmittelverdunstung, ohne Starterzugabe, insbesondere ohne Peroxidzugabe durchführbar sein.
In besonderer Ausführung soll der Einsatz von Amin- oder Anilinbeschleunigern stark reduziert, bzw. auf deren Einsatz ganz verzichtet werden können.

Darüber hinaus soll ein erfindungsgemäßes Verfahren z.B. zur Markierung von Fahrbahnoberflächen in einem Bereich zwischen 5 °C und 50 °C unabhängig von der Umgebungstemperatur ohne Blasenbildung durchführbar sein.

Eine besondere Aufgabe bestand darin, eine Apparatur zur Verfügung zu stellen, mit der das Verfahren zur Markierung von Straßen einfach und schnell durchzuführen ist. Darüber hinaus sollte eine Apparatur zur Verfügung gestellt werden, mittels derer die Aushärtung eines Reaktionsharzes einfach und schnell initiiert werden kann. Insbesondere sollen diese Apparaturen auf konventionellen Maschinen adaptierbar sein.

Weitere nicht explizit genannte Aufgaben ergeben sich aus dem Gesamtzusammenhang der nachfolgenden Beschreibung, Ansprüche und Beispiele.

### Lösung

Die Aufgaben werden gelöst durch ein neuartiges Verfahren zur Applizierung und Aushärtung von Reaktionsharzen oder Kaltplastiken, welche bevorzugt auf (Meth)acrylatbasis sind und Monomere und Polymere enthält. Dieses Verfahren weißt die folgenden beiden Verfahrensschritte auf: Zuerst wird z. B. mittels einem Pinsel, einer Düse, Rolle, Rakel oder Spachtel das Reaktionsharz oder die Kaltplastik auf einer Bodenfläche als Film oder Flocken appliziert. Später wird durch Bestrahlung mit einer Plasmaquelle die Aushärtung des Films oder der Flocken initiiert. Später bedeutet in diesem Zusammenhang insbesondere, dass die Aushärtung nur wenige Sekunden nach der Applizierung, bevorzugt mittels einer weiter unten beschriebenen Gesamtvorrichtung innerhalb zweier direkt mit einander verbundener Verfahrenschritte. Die Formulierung auf (Meth)acrylatbasis bedeutet in diesem Zusammenhang, dass es sich bei den Monomeren zu mindestens 50 Gew%, bevorzugt zu mindestens 75 Gew% und besonders bevorzugt gesamtheitlich um (Meth)acrtylate handelt. Die Formulierung (Meth)acrylate umfasst sowohl Acrylate als auch Methacrylate oder deren Mischungen.

Das erfindungsgemäße Plasmaverfahren löst die Topfzeitproblematik bei der Verarbeitung der Reaktionsharze und eliminiert so Verarbeitungsfehler. Mit dem neuen Plasmaverfahren gestaltet sich die Verarbeitbarkeit von Reaktionsharzen z. B. im Spritzverfahren ähnlich einfach und betriebssicher, wie etwa die von 1-komponetigen lösemittelhaltigen Farben, jedoch unter Beibehaltung der bekannten Vorteile von reaktionsharzgebundenen Systemen gegenüber Farben, z. B. hinsichtlich Lösemittelemission, Langlebigkeit der Beschichtung.

Bodenfläche bedeutet in diesem Fall insbesondere Fußböden, Dachflächen, Straßen, Fahrradwege, Bürgersteige oder Plätze. Besonders bevorzugt betrifft das Verfahren die Markierung von Straßen oder Fahrradwegen, im Weiteren kurz zusammengefasst als Straßenmarkierung.

Plasmen werden meist im Vakuum eingesetzt. Plasmapolymerisation von MMA wird Beispielsweise in den Arbeiten von C. W. Paul, A. T. Bell und D. S. Soong "Initiation of Methyl Methacrylate Polymerization by the Nonvolatile Products of a Methyl Methacrylate Plasma. 1. Polymerization Kinetics" (Macromolecules 1985, vol. 18, 11, 2312-2321) beschrieben. Hier wird ein solches Vakuumplasma eingesetzt. Erfindungsgemäß wird bei dem vorliegenden Verfahren als Radikalquelle ein sogenanntes Atmosphärendruckplasma eingesetzt. Dazu können beispielsweise handelsübliche Plasmajets/Plasmabeams, wie sie z.B. die Firma Plasmatreat GmbH oder die Firma Diener GmbH anbieten, eingesetzt werden. Das Plasma arbeitet unter Atmosphärendruck und wird unter anderem in der Automobilindustrie zum Entfernen von Fetten oder anderen Verunreinigungen auf Oberflächen eingesetzt. Im Gegensatz zu dem in der Literatur beschriebenen Plasmaverfahren wird das Plasma erfindungsgemäß außerhalb der eigentlichen Reaktionszone (Polymerisation) erzeugt und mit hoher Störmungsgeschwingkeit auf die Oberfläche der zu behandelnden applizierten Reaktionsharz- oder Kaltplastikbeschichtung auf der Bodenfläche geblasen. Dabei entsteht eine Art "Plasmafakel". Vorteil des Verfahrens ist, dass die eigentliche Plasmabildung nicht durch das Substrat beeinflusst wird, was zu einer hohen Prozesssicherheit führt. Die Plasmajets werden normalerweise mit Luft betrieben, so dass ein Sauerstoff/Stickstoff Plasma entsteht. Bei den Plasmajets wird das Plasma durch eine elektrische Entladung im inneren der Düse erzeugt. Die Elektroden sind elektrisch getrennt. Es wird eine so hohe Spannung angelegt, bis ein Funken von einer Elektrode zur anderen Übergeht. Es kommt zur Entladung. Dabei können unterschiedlich viele Entladungen pro Zeiteinheit eingestellt werden. Die Entladungen können durch Pulsen einer Gleichspannung erfolgen. Eine weitere Möglichkeit ist die Entladungen durch eine Wechselspannung zu erreichen.

Überraschend wurde gefunden, dass die Radikale von den Monomeren in dem Reaktionsharz oder der Kaltplastik absorbiert werden und es zu einer Polymerisation und damit zu einer Aushärtung kommt. Mit dem Plasmajet ist es gelungen auch dickere Schichten von bis zu ca. 1000 µm, insbesondere bis 700 µm dicke Monomerschicht auszuhärten.

In einer für Straßenmarkierungen bevorzugten Ausführungsform ist das Verfahren dadurch gekennzeichnet, dass zwischen der Applizierung und der Aushärtung, z.B. mittels einer zusätzlichen Düse oder Rolle, Glasperlen auf die Oberfläche des Films bzw. der Flocken aufgebracht werden.

Besonders bevorzugt und gleichzeitig ein Vorteil des erfindungsgemäßen Verfahrens ist, dass das Reaktionsharz oder die Kaltplastik frei von Lösungsmitteln, von Peroxiden und von Azainitiatoren ist. Darüber hinaus ist das Reaktionsharz oder die Kaltplastik bevorzugt halogenfrei. Dadurch wird die Arbeitssicherheit bei der Applikation, bzw. deren Vorbereitung gegenüber dem Stand der Technik deutlich verbessert.

Ganz besonders bevorzugt sind solche Verfahrensausführungen, die ganz ohne oder mit deutlich reduzierten Beschleunigeranteilen in den Reaktionsharzen bzw. Kaltplastiken eine Aushärtung gewährleisten. Damit reduziert sich, bzw. entfällt die Handhabung dieser gefährlichen Stoffe und es werden Harze, bzw. Kaltplastiken mit verbesserter Lagerstabilität erhalten.

Insbesondere für Straßenmarkierungen oder Bodenbeschichtungen ist es bevorzugt, wenn das Reaktionsharz mindestens einen Vernetzer enthält.

In einer solchen Variante weist das Reaktionsharz bevorzugt folgende Inhaltsstoffe auf:
0 Gew% bis 30 Gew% Vernetzer,
5 Gew% bis 97 Gew% Monomere,
0 Gew% bis 20 Gew% Urethan(meth)acrylate,
3 Gew% bis 70 Gew% Präpolymere,
0 Gew% bis 5 Gew% Beschleuniger,
0 Gew% bis 25 Gew% Kern-Schale Partikel und
gegebenenfalls weitere Hilfsstoffe.

Bei den weiteren Hilfsstoffen kann es sich z.B. um Stabilisatoren, Entschäumer, Haftvermittler, Regler oder Wachse handeln.

Insbesondere kann das Reaktionsharz folgende Inhaltsstoffe aufweisen:
20 Gew% bis 30 Gew% Di-, Tri- oder Tetramethacrylate als Vernetzer,
30 Gew% bis 80 Gew% (Meth)acrylate und/oder mit (Meth)acrylaten copolymerisierbare Komponenten als Monomere,
0 Gew% bis 20 Gew% Urethan(meth)acrylate,
10 Gew% bis 50 Gew% Poly(meth)acrylate und/oder Polyester als Präpolymere,
0 Gew% bis 5 Gew% Beschleuniger,
0 Gew% bis 15 Gew% Kern-Schale Partikel enthaltend Polymethacrylate und gegebenenfalls weitere Hilfsstoffe.

Die Formulierungen Poly(meth)acrylate umfasst sowohl Polymethacrylate wie auch Polyacrylate sowie Copolymere oder Mischungen aus beiden. Die Formulierung (Meth)acrylate umfasst entsprechend Methacrylate, Acrylate oder Mischungen aus beiden.

Eine in dem erfindungsgemäßen Verfahren verwendete Kaltplastik weist darüber hinaus folgende Komponenten auf:
5 Gew% bis 60 Gew% eines beschriebenen Reaktionsharzes,
0,15 Gew% bis 25 Gew% eines anorganischen Pigments, bevorzugt Titandioxid 10 Gew% bis 90 Gew% mineralische und/oder polymere Füllstoffe und
0 Gew% bis 5 Gew% Stabilisatoren und/oder Additive.

Die einzelnen Komponenten der Kaltplastik wie z.B. das erfindungsgemäß verwendete Reaktionsharz können vor oder während der Weiterverarbeitung, wie z.B. dem Auftragen auf einer Fahrbahnoberfläche, gemischt werden. Etabliert ist ein Einmischen vor der Weiterverarbeitung. Wobei das erfindungsgemäße Verfahren den großen Vorteil hat, dass diese Mischung lagerstabil ist und im Gegensatz zu Kaltplastiken des Standes der Technik keine Initiatorkomponente enthält. Somit muss nach dem Mischen nicht binnen weniger Minunten die Applikation erfolgen. Eine fertig gemischte Kaltplastik muss maximal vor der Applikation noch einmal aufgerührt werden, um Sedimentationen zu redispergieren.
Aber auch ein Mischen während des Verarbeitens ist zum Beispiel in modernen Markierungsmaschinen, die über eine der Auftragsdüse vorgeschaltete Mischkammer verfügen, möglich.

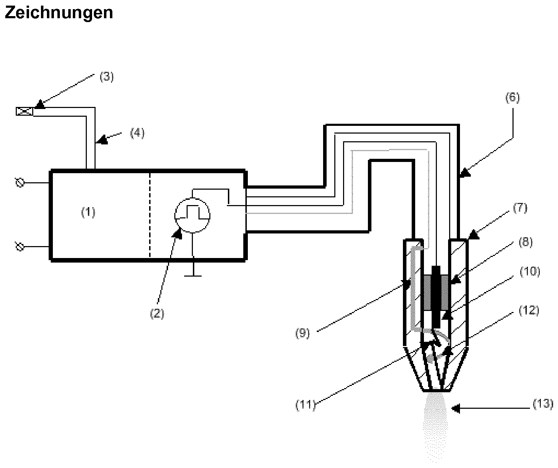

Neben dem Verfahren betrifft die vorliegende Erfindung eine Apparatur zur Aushärtung eines applizierten Reaktionsharzes oder einer applizierten Kaltplastik. Dieser erfindungsgemäße Apparat ist an einem Fahrzeug derart befestigt ist, dass in Richtung des Bodens ein Plasmastrahl, insbesondere mit einem Abstand zum Boden zwischen 0,1 und 10 cm, erzeugt werden kann, und dass der Apparat mindestens folgende Komponenten, bevorzugt in Anordnung gemäß Fig.1 aufweist: einen Hochspannungsgenerator (2), eine Gas- und Stromzuleitung in einem flexiblen Rohr (6), eine äußere potentialfreie Elektrode (7), einen Isolator (8), eine Zentralelektrode (10) und einen Gaskanal (9), der den Gasstrom an der Zentralelektrode vorbei führt, wobei die Elektroden (7) und (10) derart einen Lichtbogen (11) erzeugen, dass aus dem eingeleiteten Gas ein potentialfreier Plasmastrahl (13) gebildet wird.

Ein dazu verwendetes Fahrzeug kann dabei verschiedene Ausführungen umfassen. Insbesondere geeignet sind LKW, wie sie für die Markierung von Straßen, z.B. Autobahnen gebräuchlich sind.

Erfindungsgemäß betreffen diese Fahrzeuge zur Applikation einer Straßenmarkierung insbesondere Fahrzeuge, die in Fahrtrichtung hintereinander eine oder mehrere Düsen oder Rollen zur Applikation eines Reaktionsharzes oder einer Kaltplastik, eine oder mehrere optionale weitere Düsen oder Rollen zur Applikation von Glasperlen und/oder Einstreumitteln auf das zuvor applizierte Reaktionsharz oder die zuvor applizierte Kaltplastik und einen zuvor beschriebenen Apparat zur Initiierung der Aushärtung des applizierten Reaktionsharzes oder der applizierten Kaltplastik aufweisen.

Als Einstreumittel werden Feststoffe verschiedener Korngröße in der Form von Pudern, Sanden, Granulaten, Kugeln oder Mahlguten, die sowohl organischer als auch anorganischer Natur sein können. Insbesondere werden Glasperlen, Korund sowie Quarzsand verwendet.

Darüber hinaus umfasst die vorliegende Erfindung die Verwendung des beschriebenen Verfahrens zur Herstellung von langlebigen Fahrbahnmarkierungen.

Insgesamt weisen die erfindungsgemäß hergestellten Bodenbeschichtungen, insbesondere Fahrbahnmarkierungen eine längere Lebensdauer auf als Systeme, die gemäß Stand der Technik verarbeitet wurden.

Überraschend wurde gefunden, dass sämtliche guten Eigenschaften bei Durchführung des Verfahrens in dem relevanten Temperaturfenster zwischen -30 °C und 70 °C, bevorzugt zwischen -10 °C und 50 °C, besonders bevorzugt zwischen 5°C und 50°C
temperaturunabhängig erhalten werden.

Darüber hinaus wurde auch überraschend gefunden, dass gute mechanischen Eigenschaften der erfindungsgemäß ausgehärteten Fahrbahnmarkierung in einem typischen Bereich zwischen 100 µm und 3000 µm erhalten werden. Die Auftragsdicke der erfindungsgemäßen Kaltplastik bzw. Kaltspritzplastik liegt bevorzugt zwischen 150 µm und 1000 µm und besonders bevorzugt zwischen 200 µm und 500 µm. Dünnere und dickere Schichten sind ja nach Anwendung möglich. Insbesondere Schichten mit einer Schichtdicke zwischen 100 und 300 µm sind mit Reaktionsharzen des Standes der Technik enthaltend 2K-Initiatorsystemen, z. B. mit Peroxiden und Aminbeschleunigern, nur schlecht zu realisieren. Hier liegt ein weiterer Vorteil der vorliegenden Erfindung, dass auch solche dünnen Bodenbeschichtungen einfach auszuhärten sind.

Überraschend wurde darüber hinaus gefunden, dass das Verfahren derart durchgeführt werden kann, dass die applizierte Kaltplastik oder das applizierte Reaktionsharz schnell aushärtet und bereits nach 10 min, je nach Formulierung und Stärke des Plasmastrahls bereits nach 10 min eine derartige Festigkeit, Untergrundhaftung, Formstabilität und Abriebsfestigkeit aufweist, dass sie wieder überfahrbar, oder zumindest wieder überrollt werden kann, ohne dass die Markierungsmasse an einem Gummireifen anhaften und auf die Fahrbahn gezogen wird. Das heißt bei Anwendung im Straßenverkehr, dass bei Verwendung des erfindungsgemäßen Systems ein aufwendiges und langwieriges Absperren des zu markierenden Fahrbahnabschnittes nicht mehr nötig ist.

Unter dem Begriff Überrollbarkeit wird eine Belastung der Fahrbahnmarkierung, z.B. in Form des Überrollens durch Fahrzeuge, verstanden, ohne dass es zu einer Anhaftung der Masse auf den Reifen kommt, wobei die Masse im Allgemeinen noch nicht die Endabriebsfestigkeit erreicht hat. Die Zeitspanne bis zur Erreichung einer Wiederbefahrbarkeit ist die Zeitspanne zwischen dem Auftragen der Fahrbahnmarkierung bis zu dem Zeitpunkt, an dem keine Veränderungen in Form eines Abriebs, eines Haftungsverlusts zur Fahrbahnoberfläche bzw. zu den eingebetteten Glaskugeln oder einer Verformung der Markierung mehr festgestellt werden kann. Die Messung der Form- und Haftungsstabilität erfolgt gemäß DIN EN 1542 99 in Einklang mit DAfStb-RiLi 01.

### Komponenten der Kaltplastik bzw. des Reaktionsharzes

Zusätzlich kann die Kaltplastik oder Kaltspritzplastik weitere Hilfsstoffe wie Netz- und/oder Dispergiermittel, einen griffigen (rutschfesten) Füllstoff und Antiabsetzmittel enthalten. Auch können wie beschrieben die Glaskugeln, die zur Verbesserung der Reflexion zugesetzt werden, bereits in dieser Komponente der Kaltplastik enthalten sein. Alternativ können diese auch Bestandteil der zweiten Komponente sein und bevorzugt, je nach Auftragungsmechanismus der Fahrbahnmarkierung, werden die Glaskugeln als dritte Komponente zwischen der Applikation und der Aushärtung aufgetragen. Bei diesem Vorgehen, zum Beispiel angewendet mit modernen Markierungsfahrzeugen mit einer zweiten Düse, werden die Kugeln direkt nach dem Auftrag der ersten beiden Komponenten auf diese aufgespritzt. Vorteil bei diesem Vorgehen ist, dass nur der Teil der Glaskugeln, der in die Markierungsmatrix eingebettet ist, mit den Bestandteilen der anderen beiden Komponenten benetzt ist und man erhält optimale Reflexionseigenschaften. Ganz besonders bei Anwendung dieser Technologie ist jedoch eine besonders gute Einbettung der Glasperlen und eine entsprechend gute Haftung der Markierungsmatrix, bzw. der Fahrbahnmarkierungsformulierung an der Oberfläche der Glaskugeln wichtig. Überraschend wurde gefunden, dass das erfindungsgemäße Reaktionsharz, bzw. die Kaltspritzplastik, dieses Reaktionsharz enthaltend, diese geforderten Eigenschaften mindestens auf dem Niveau des Standes der Technik erfüllt. Genaue geregelt sind die geforderten Eigenschaften an eine Straßenmarkierung in DIN EN 1436.

Um die geforderten Eigenschaften weiter zu verbessern, können die Glaskugeln mit Haftvermittlern zusammen aufgetragen oder mit diesen vorher behandelt werden. Somit sind die Retrorefelektionseigenschaften und die Tages- bzw. Nachtsichtbarkeit der erfindungsgemäßen Kaltplastik mit dem Stand der Technik zumindest vergleichbar. Entsprechendes gilt für die Langlebigkeit, insbesondere der Einbettung der Glasperlen. Ein großer Vorteil des vorliegenden Verfahrens ist, dass nach Stand der Technik diese Glaskugeln vor der Applikation in der Regel mittels eines Plasma oberflächengereinigt werden. Dieser zusätzliche Verfahrensschritt kann bei dem vorliegenden Verfahren entfallen, da die Reinigung bei der Initiierung der Aushärtung in-situ erfolgt.

In einer alternativen Ausführungsform werden zur Beschleunigung der Aushärtung zusätzlich Beschleuniger zugesetzt. Bei diesen Beschleunigern handelt es sich insbesondere um Substanzen, die die während der Plasmabehandlung freigesetzten Radikale speichern oder in stabiliere Radikale überführen, die zum weiteren Durchhärten der Masse nach der Behandlungsdauer führen. Insbesondere denkbar sind hierbei die aus der klassischen radikalischen Polymerisation von Acrylaten und Methacrylaten bekannten Verzögerer und Regler.
Weiterhin als Beschleuniger denkbar sind Substanzen, die unter Einwirkung von Plasma bevorzugt Radikale bilden. Hierbei kann es sich um herkömmliche UV-Initiatoren handeln, oder um andere organische Substanzen, die labile Bindungen enthalten, die unter Plasmabehandlung aufbrechen und Radikale freisetzen. Hierbei kann es sich beispielsweise um Diazoverbindungen oder um Peroxide handeln. Jedoch ist eine Formulierung ohne Peroxide oder Diazoverbindungen bevorzugt.

Ein entscheidender Bestandteil des erfindungsgemäßen Reaktionsharzes sind die Vernetzer. Insbesondere mehrfunktionelle Methacrylate wie Allyl(meth)acrylat. Besonders bevorzugt sind di- oder tri-(Meth)acrylate wie beispielsweise 1,4-Butandioldi(meth)acrylat, Poly(urethan)(meth)acrylate Tetraethylenglycol-di(meth)acrylat, Triethylenglycoldi(meth)acrylat oder Trimethylolpropantri(meth)acrylat. Der Vernetzeranteil ist gegenüber dem Stand der Technik deutlich erhöht und liegt zwischen 13 Gew% und 35 Gew%, bevorzugt zwischen minimal 20 Gew% und maximal 30 Gew%. Überraschend wurde gefunden, dass dieser relativ hohe Anteil an Vernetzer nicht nur eine hohe Anfangshärtung mit sich bringt, sondern auch in Kombination mit den anderen Komponenten eine schnelle Überrollbarkeit der Fahrbahnmarkierung, das erfindungsgemäße Harz enthaltend, ermöglicht.

Unter den optional enthaltenen Urethan(meth)acrylaten versteht man im Rahmen dieser Erfindung Verbindungen, die (Meth)acrylat-Funktionalitäten aufweisen, die über Urethangruppen miteinander verknüpft sind. Sie sind durch die Umsetzung von Hydroxyalkyl(meth)acrylaten mit Polyisocyanaten und Polyoxyalkylenen, die mindestens zwei Hydoxyfunktionalitäten aufweisen, erhältlich. Anstelle von Hydroxyalkyl(meth)acrylaten können auch Ester der (Meth)acrylsäure mit Oxiranen, wie beispielsweise Ethylen- oder Propylenoxid, oder entsprechenden Oligo- bzw. Polyoxiranen verwendet werden. Einen Überblick beispielsweise über Urethan(meth)acrylate mit einer Funktionalität größer zwei findet man in DE 199 02 685. Ein kommerziell erhältliches Beispiel hergestellt aus Polyolen, Isocyanaten und hydroxyfunktionellen (Meth)acrylaten ist EBECRYL 210-5129 der Fa. UCB Chemicals.
Urethan(meth)acrylate erhöhen in einem Reaktionsharz, ohne größere Temperaturabhängigkeit, die Flexibilität, die Reißfestigkeit und die Reißdehnung. Dies hat, wie überraschend gefunden wurde, auf die Fahrbahnmarkierung in zweierlei Hinsicht einen Einfluss: Die Temperaturstabilität der Markierung nimmt zu und, besonders überraschend, können die Nachteile eines, bedingt durch den höheren Vernetzergehalt, höheren Vernetzungsgrades bezüglich Versprödung und Haftung gegenüber der Fahrbahnoberfläche ausgeglichen werden oder sogar gegenüber Kaltplastiken gemäß dem Stand der Technik verbessert werden. Dazu ist eine für Fahrbahnmarkierungen relativ hohe Konzentration der Urethan(meth)acrylate in dem Reaktionsharz nötig. Das erfindungsgemäße Reaktionsharz enthält zwischen 5 Gew% und 30 Gew%, bevorzugt zwischen 10 Gew% und 20 Gew% der beschriebenen Urethan(meth)acrylate.

Bei den in dem Reaktionsharz enthaltenden Monomeren handelt es sich um Verbindungen, die ausgewählt sind aus der Gruppe der (Meth)acrylate wie beispielsweise Alkyl(meth)acrylate von gradkettigen, verzweigten oder cycloaliphatischen Alkoholen mit 1 bis 40 C-Atomen, wie zum Beispiel Methyl(meth)acrylat, Ethyl(meth)acrylat, n-Butyl(meth)acrylat, 2-Ethylhexyl(meth)acrylat, Stearyl-(meth)acrylat, Lauryl(meth)acrylat; Aryl(meth)acrylate wie zum Beispiel Benzyl(meth)acrylat; Mono(meth)acrylate von Ethern, Polyethylenglycolen, Polypropylenglycolen oder deren Mischungen mit 5 bis 80 C-Atomen, wie beispielsweise Tetrahydrofurfury(lmeth)acrylat, Methoxy(m)ethoxyethyl(meth)acrylat, Benzyloxymethyl(meth)acrylat, 1-Ethoxybutyl(meth)acrylat, 1-Ethoxyethyl(meth)acrylat, Ethoxymethyl(meth)acrylat, Poly(ethylenglycol)methylether(meth)acrylat und Poly(propylenglycol)-methylether(meth)acrylat, zusammen.

Als Bestandteile von Monomergemischen eignen sich auch zusätzliche Monomere mit einer weiteren funktionellen Gruppe, wie a,β-ungesättigte Mono- oder Dicarbonsäuren, beispielsweise Acrylsäure, Methacrylsäure oder Itaconsäure; Ester der Acrylsäure oder Methacrylsäure mit zweiwertigen Alkoholen, beispielsweise Hydroxyethyl(meth)acrylat oder Hydroxypropyl(meth)acrylat; Acrylamid oder Methacrylamid; oder Dimethylaminoethyl(meth)acrylat. Weitere geeignete Bestandteile von Monomergemischen sind beispielsweise Glycidyl(meth)acrylat oder silylfunktionelle (Meth)acrylate.

Neben den zuvor dargelegten (Meth)acrylaten können die Monomergemische auch weitere ungesättigte Monomere aufweisen, die mit den zuvor genannten (Meth)acrylaten und mittels freiradikalischer Polymerisation copolymerisierbar sind. Hierzu gehören unter anderem 1-Alkene oder Styrole.

Im Einzelnen wird das Poly(meth)acrylat nach Anteil und Zusammensetzung zweckmäßigerweise im Hinblick auf die gewünschte technische Funktion gewählt werden.
Der Monomeranteil des Reaktionsharzes liegt dabei zwischen 20 Gew% und 85 Gew%, bevorzugt zwischen 30 Gew% und 40 Gew%.

In sogenannten MO-PO-Systemen liegen neben den aufgeführten Monomeren auch Polymere, zur besseren Unterscheidbarkeit im Rahmen dieses Schutzrechtes als Präpolymer bezeichnet, bevorzugt Polyester oder Poly(meth)acrylate vor. Diese werden zur Verbesserung der Polymerisationseigenschaften, der mechanischen Eigenschaften, der Haftung zum Untergrund sowie der optischen Anforderungen an die Harze eingesetzt. Der Präpolymeranteil des Reaktionsharzes liegt dabei zwischen 10 Gew% und 30 Gew%, bevorzugt zwischen 15 Gew% und 25 Gew%. Sowohl die Polyester als auch die Poly(meth)acrylate können zusätzliche funktionelle Gruppen zur Haftvermittlung oder zur Copolymerisation in der Vernetzungsreaktion, wie beispielsweise in Form von Doppelbindungen, aufweisen. Bevorzugt, in Hinblick auf eine bessere Farbstabilität der Fahrbahnmarkierung, weisen die Präpolymere jedoch keine Doppelbindungen auf.
Besagte Poly(meth)acrylate sind im Allgemeinen aus den gleichen Monomeren zusammengesetzt, wie sie bereits bezüglich der Monomere im Harzsystem aufgelistet wurden. Sie können durch Lösungs-, Emulsions-, Suspensions-, Substanz- oder Fällungspolymerisation gewonnen werden und werden dem System als Reinstoff zugesetzt.
Besagte Polyester werden in Substanz via Polykondensation oder ringöffnende Polymerisation gewonnen und setzen sich aus den für diese Anwendungen bekannten Bausteinen zusammen.

Durch die Zugabe von Kern-Schale Partikeln, insbesondere bekannt als Impact Modifier für z.B. PMMA-Formmassen oder PVC, konnten überraschend wesentliche Eigenschaften von acrylischen Reaktionsharzen entscheidend verbessert werden. Hierbei sind vor allem eine hohe Flexibilität von dennoch harten Strukturen sowie eine verbesserte Temperaturbeständigkeit bei der Härtung, unter Vermeidung von Blasenbildung, zu erwähnen. Die Kern-Schale Partikel werden in einem Anteil von 1 bis 25 Gew% in die Reaktionsharze, bevorzugt 1 bis 15 Gew%, besonders bevorzugt 2 bis 12 Gew% eingebracht. Die Kern-Schale Partikel müssen gut dispergiert in der Monomer-Polymer Mischung des Reaktionsharzes vorliegen um keine Trübungen oder Klumpenbildung zu verursachen. Dies kann durch entsprechendes Rühren oder mittels einer anderen bekannten Dispergiertechnik einfach sichergestellt werden. Diese Eigenschaften führen zu einer höheren mechanischen Belastbarkeit und darüber hinaus zu einer Verminderung der Rissfortpflanzung und einer höheren Verträglichkeit punktueller Belastung. Die Zugabe von Kern-Schale Partikeln zu Reaktionsharzen bzw. Kaltplastiken ist ausführlich in der internationalen Patentanmeldung WO 2011/072846 beschrieben.

Als Hilfs- und Zusatzstoffe können zusätzlich Regler, Weichmacher, Paraffine, Stabilisatoren, Inhibitoren, Wachse und/oder Öle eingesetzt werden.
Die Paraffine werden zugesetzt, um eine Inhibierung der Polymerisation durch den Sauerstoff der Luft zu verhindern. Dazu können mehrere Paraffine mit unterschiedlichen Schmelzpunkten in unterschiedlichen Konzentrationen verwendet werden.

Als Regler können alle aus der radikalischen Polymerisation bekannten Verbindungen verwendet werden. Bevorzugt werden Mercaptane wie n-Dodecylmercaptan eingesetzt.
Als Weichmacher werden vorzugsweise Ester, Polyole, Öle, niedermolekulare Polyether oder Phthalate eingesetzt.

Zusätzlich können den Formulierungen zur Fahrbahnmarkierungen Farbstoffe, Glasperlen, Fein- und Grobfüllstoffe, Netz-, Dispergier- und Verlaufshilfsmittel, UV-Stabilisatoren, Entschäumer und Rheologieadditive zugesetzt werden.
Für das Einsatzgebiet der Formulierungen als Farbahnmarkierung oder Flächenmarkierung werden als Hilfs- und Zusatzstoffe vorzugsweise Farbstoffe zugegeben. Besonders bevorzugt sind weiße, rote, blaue, grüne und gelbe anorganische Pigmente, besonders bevorzugt sind weiße Pigmente wie Titandioxid.

Glasperlen werden vorzugsweise in Formulierungen für Fahrbahnmarkierungen und Flächenmarkierungen als Reflexionsmittel eingesetzt. Die eingesetzten handelsüblichen Glasperlen haben Durchmesser von 10 µm bis 2000 µm, bevorzugt 100 µm bis 1200 µm. Die Glasperlen können zur besseren Verarbeitung und Haftung mit einem Haftvermittler versehen werden. Bevorzugt können die Glasperlen silanisiert werden.

Zudem können der Formulierung ein oder mehrere mineralische Feinfüllstoffe und Grobfüllstoffe zugesetzt werden. Diese Materialien dienen auch als Rutschhemmer und werden daher insbesondere zur Griffverbesserung und zur zusätzlichen Färbung der Fahrbahnmarkierung eingesetzt. Feinfüllstoffe werden aus der Gruppe der Calciumcarbonate, Bariumsulfate, Quarze, Quarzmehle, gefällten und pyrogenen Kieselsäuren, Pigmente und Cristobalite sowie Korund eingesetzt. Als Grobfüllstoffe werden Quarze, Cristobalite, Korunde und Aluminiumsilikate eingesetzt.

Es können auch Stabilisatoren und Additive der Formulierung zugesetzt werden. So können z.B. herkömmliche UV-Stabilisatoren eingesetzt werden. Vorzugsweise werden die UV-Stabilisatoren ausgewählt aus der Gruppe der Benzophenonderivate, Benzotriazolderivate, Thioxanthonatderivate, Piperidinolcarbonsäureesterderivate oder Zimtsäureesterderivate.
Aus der Gruppe der Stabilisatoren bzw. Inhibitoren werden vorzugsweise substituierte Phenole, Hydrochinonderivate, Phosphine und Phosphite eingesetzt.

Folgende Komponenten können optional auch in Formulierungen zur Fahrbahnmarkierung enthalten sein:
Netz-, Dispergier- und Verlaufshilfsmittel werden vorzugsweise ausgewählt aus der Gruppe der Alkohole, Kohlenwasserstoffe, Glycolderivate, Derivate von Glycolsäureestern, Essigsäureestern und Polysiloxanen, Polyether, Polysiloxane, Polycarbonsäuren, gesättigte und ungesättigte Polycarbonsäureaminamide eingesetzt.

Als Rheologieadditive werden vorzugsweise Polyhydroxycarbonsäureamide, Harnstoffderivate, Salze ungesättigter Carbonsäureester, Alkylamoniumsalze saurer Phosphorsäurederivate, Ketoxime, Aminsalze der p-Toluolsulfonsäure, Aminsalze von Sulfonsäurederivaten sowie wässrige oder organische Lösungen oder Mischungen der Verbindungen verwendet. Es wurde gefunden, dass Rheologieadditive auf Basis pyrogener oder gefällter, optional auch silanisierter, Kieselsäuren mit einer BET-Oberfläche von 10-700 nm²/g besonders geeignet sind.

Entschäumer werden vorzugsweise ausgewählt aus der Gruppe der Alkohole, Kohlenwasserstoffe, paraffinbasischen Mineralöle, Glycolderivate, Derivate von Glycolsäureestern, Essigsäureestern und Polysiloxanen eingesetzt.

Diese Formulierungsfreiheiten zeigen, dass das erfindungsgemäße Verfahren für Reaktionsharze bzw. die daraus hergestellten Kaltplastiken/Kaltspritzplastiken mit einer sehr breiten Formulierungsbreite gut anwendbar ist. Somit sind auch die Abriebfestigkeit, die Langlebigkeit, der Weißgrad, die Pigmentierung und die Griffigkeit der erfindungsgemäß applizierten und ausgehärteten Systeme mindestens so gut wie bei Systemen des Standes der Technik.

Im Vergleich mit dem Stand der Technik ist entsprechend eine höhere Lagerstabilität des Reaktionsharzes bzw. der Kaltplastik gewährleistet, da diese keine initiierungsaktiven Komponenten enthalten.

Auch kann das Verfahren bezüglich des zu beschichtenden Untergrunds, der Wahl geeigneter Monomere, Präpolymere und/oder Haftvermittler, frei eingesetzt werden. Das erfindungsgemäße Verfahren ist entsprechend variabel einsetzbar für die Markierung von Asphalt-, Beton-, Natursteinoberflächen, Metall oder andere Untergründe.

### Verwendung der Reaktionsharze bzw. Kaltplastiken/Kaltspritzplastiken

Bevorzugt werden die erfindungsgemäßen Reaktionsharze bzw. die daraus hergestellten Kaltplastiken zur Herstellung von langlebigen Fahrbahnmarkierungen verwendet.

Alternativ kann das erfindungsgemäße Verfahren auch in anderen technischen Gebieten Anwendung finden. Beispiele dafür sind Fußbodenbeläge, bevorzugt für industrielle Anwendungen, zur Abdichtung von Brücken oder deren Fugen, insbesondere als Dampfsperrmembran, zur Brückenbeschichtung allgemein oder als Dampfsperrmembran auf Dächern. Daneben kann das neue Verfahren zur Herstellung von Oberflächenschutzbeschichtungen auf unterschiedlichsten Materialien, insbesondere auf Metall, z. B. für Abdichtungsmembranen oder für flammhemmende Beschichtungen auf Stahlkonstruktionen, so genannte Intumeszenzbeschichtungen, angewendet werden.

Die im Folgenden gegebenen Beispiele werden zur besseren Veranschaulichung der vorliegenden Erfindung gegeben, sind jedoch nicht dazu geeignet, die Erfindung auf die hierin offenbarten Merkmale zu beschränken.

### Beispiele

### Vorstufe 1:

Zu 100 Gewichtsteilen Degaroute 663, werden mit 10 Gewichtsteile Titandioxid (TR 92), 54,6 Gewichtsteile Feinfüllstoff (Omyacarb 15 GU), 0,3 Gewichtsteile eines Dispergierhilfsmittels (TEGO® Dispers 670) und 0,1 Gewichtsteile Rheologieadditiv (Byk 410) unter Dispergieren zu einer Fahrbahnmarkierungsfarbe konfektioniert. Dabei wird das Harz vorgelegt, ein Teil des Rheologieadditivs über einen Zeitraum von 5 Minuten eindispergiert, anschließend das Dispergierhilfsmittels ebenfalls über 5 Minuten, und darauf das Titandioxid und der Feinfüllstoff jeweils weitere 10 Minuten eindispergiert. Am Schluss wird die restliche Menge des Dispergierhilfsmittels eingearbeitet.

### Beispiel 1: Laborversuch auf Ethernituntergrund

Das Produkt aus Vorstufe 1 wird durch Rühren per Hand mit einem Holzspatel homogenisiert. Anschließend wird es auf die mit Isopropanol und Aceton gereinigte Eternit-Oberfläche gebracht und mit einem 500 µm-Rakel, das eine Breite von 10 cm hat, verteilt.

Der nächste Schritt ist die Plasmabehandlung mit dem Plasmagerät des Typs F63002 der Firma Plasmatreat. Hierfür wird ein Roboter der Firma Fisner, Serie I&J9000 verwendet.

Durch eine Programmfolge wird eine Geschwindigkeit von 25 mm/s ausgewählt. Dabei werden Streifen im Abstand von 10 mm abgefahren. Das Luftplasma wird mit einem Minimaldruck von 0,75 bar betrieben.

Nach der beschriebenen Plasmabehandlung ist die Oberfläche klebfrei und nach spätestens 24 h vollständig ausgehärtet.

### Beispiel 2: Laborversuch auf Ethernit mit Glaskugeln

Das Produkt aus Vorstufe 1 wird durch Rühren per Hand mit einem Holzspatel homogenisiert. Anschließend wird es auf die mit Isopropanol und Aceton gereinigte Eternit-Oberfläche gebracht und mit einem 500 µm-Rakel, das eine Breite von 10 cm hat, verteilt. Durch eine Kathedrale bringt man ca. 240 g Perlen pro m² auf die feuchte Oberfläche auf. Die Kathedrale dient zur homogenen Verteilung der Glasperlen. Die überschüssigen Perlen werden durch ein schnelles Hin- und Herwenden um 180° des Eternit-Trägers entfernt.

Der nächste Schritt ist die Plasmabehandlung mit dem Plasmagerät des Typs F63002 der Firma Plasmatreat. Hierfür wird ein Roboter der Firma Fisner, Serie I&J9000 verwendet.

Durch eine Programmfolge wird eine Geschwindigkeit von 25 mm/s ausgewählt. Dabei werden Streifen im Abstand von 10 mm abgefahren. Das Luftplasma wird mit einem Minimaldruck von 0,75 bar betrieben.

Nach der beschriebenen Plasmabehandlung ist die Oberfläche klebfrei und nach spätestens 24 h vollständig ausgehärtet.

### Beispiel 3: Laborversuch auf Metall

Das Produkt aus Vorstufe 1 wird durch Rühren per Hand mit einem Holzspatel homogenisiert. Anschließend wird es auf eine Metallplatte aufgebracht und mit einem 500 µm-Rakel, das eine Breite von 10 cm hat, verteilt.

Der nächste Schritt ist die Plasmabehandlung mit dem Plasmagerät des Typs F63002 der Firma Plasmatreat. Hierfür wird ein Roboter der Firma Fisner, Serie I&J9000 verwendet.

Durch eine Programmfolge wird eine Geschwindigkeit von 25 mm/s ausgewählt. Dabei werden Streifen im Abstand von 10 mm abgefahren. Das Luftplasma wird mit einem Minimaldruck von 0,75 bar betrieben.

Nach der beschriebenen Plasmabehandlung ist die Oberfläche klebfrei und nach spätestens 24 h vollständig ausgehärtet.

### Beispiel 4: Laborversuch auf Metall

Das Produkt aus Vorstufe 1 wird durch Rühren per Hand mit einem Holzspatel homogenisiert. Anschließend wird es auf eine Metallplatte aufgebracht und mit einem 700 µm-Rakel, das eine Breite von 10 cm hat, verteilt.

Der nächste Schritt ist die Plasmabehandlung mit dem Plasmagerät des Typs F63002 der Firma Plasmatreat. Hierfür wird ein Roboter der Firma Fisner, Serie I&J9000 verwendet.

Durch eine Programmfolge wird eine Geschwindigkeit von 20 mm/s ausgewählt. Dabei werden Streifen im Abstand von 10 mm abgefahren. Das Luftplasma wird mit einem Minimaldruck von 0,75 bar betrieben.

Nach der beschriebenen Plasmabehandlung ist die Oberfläche klebfrei und nach spätestens 24 h vollständig ausgehärtet.

### Beispiel 5: Laborversuch auf Beton

Das Produkt aus Vorstufe 1 wird durch Rühren per Hand mit einem Holzspatel homogenisiert. Anschließend wird es auf einer handelsüblichen Gehwegplatte (40 x 40 cm) aus Beton aufgebracht und mit einem 700 µm-Rakel, das eine Breite von 10 cm hat, verteilt.

Der nächste Schritt ist die Plasmabehandlung mit dem Plasmagerät des Typs F63002 der Firma Plasmatreat. Hierfür wird ein Roboter der Firma Fisner, Serie I&J9000 verwendet.

Durch eine Programmfolge wird eine Geschwindigkeit von 20 mm/s ausgewählt. Dabei werden Streifen im Abstand von 10 mm abgefahren. Das Luftplasma wird mit einem Minimaldruck von 0,75 bar betrieben.

Nach der beschriebenen Plasmabehandlung ist die Oberfläche klebfrei und nach spätestens 24 h vollständig ausgehärtet.

### Zeichnungen

(1) Gassteuerungsblock
(2) Hochspannungsgenerator
(3) Druckluftanschluss mit trockener und ölfreier Druckluft; 5 - 8 bar, bis zu ca. 1 500 L/h
(4) Druckluftzuleitung
(5) Stromzuleitung mit 230 V, 50/80 Hz, ca. 300 W
(6) Gas- und Stromzuleitung in einem flexiblen Rohr
(7) Äußere potentialfreie Elektrode
(8) Isolator
(9) Gaskanal
(10) Zentralelektrode
(11) Lichtbogen
(12) Gasfluss
(13) Potentialfreier Plasmastrahl (Aktivgasstrahl)

## Patentansprüche

1. Verfahren zur Applizierung und Aushärtung von Reaktionsharzen oder Kaltplastiken, **dadurch gekennzeichnet,**
**dass** das Reaktionsharz oder die Kaltplastik Monomere und Polymere enthält, mittels einem Pinsel, einer Düse, Rolle, Rakel oder Spachtel auf einer Fläche als Film oder Flocken appliziert wird und anschließend durch Bestrahlung mit einem Plasma aus einer Plasmaquelle die Aushärtung des Films oder der Flocken initiiert wird.

2. Verfahren gemäß Anspruch 1, **dadurch gekennzeichnet,**
**dass** es sich bei den Monomeren um (Meth)acrylate handelt.

3. Verfahren gemäß Anspruch 1 oder 2, **dadurch gekennzeichnet,**
**dass** zwischen der Applizierung und der Aushärtung Glasperlen und oder andere Einstreumittel auf die Oberfläche des Films bzw. der Flocken aufgebracht werden.

4. Verfahren gemäß mindestens einem der Ansprüche 1 bis 3, **dadurch gekennzeichnet, dass** das Reaktionsharz oder die Kaltplastik frei von Peroxiden und oder Azoinitiatoren ist.

5. Verfahren gemäß mindestens einem der Ansprüche 1 bis 4, **dadurch gekennzeichnet, dass** das Reaktionsharz oder die Kaltplastik frei von Beschleunigern ist.

6. Verfahren gemäß mindestens einem der Ansprüche 1 bis 5, **dadurch gekennzeichnet, dass** das Reaktionsharz mindestens einen Vernetzer enthält.

7. Verfahren gemäß mindestens einem der Ansprüche 1 bis 6, **dadurch gekennzeichnet,**
**dass** das Reaktionsharz folgende Inhaltsstoffe aufweist:
0 Gew% bis 30 Gew% Vernetzer,
5 Gew% bis 97 Gew% Monomere,
0 Gew% bis 20 Gew% Urethan(meth)acrylate,
3 Gew% bis 70 Gew% Präpolymere,
0 Gew% bis 5 Gew% Beschleuniger,
0 Gew% bis 25 Gew% Kern-Schale Partikel und
gegebenenfalls weitere Hilfsstoffe.

8. Verfahren gemäß Anspruch 7, **dadurch gekennzeichnet,**
**dass** das Reaktionsharz halogenfrei ist, und dass das Reaktionsharz folgende Inhaltsstoffe aufweist:
20 Gew% bis 30 Gew% Di-, Tri- oder Tetramethacrylate,
30 Gew% bis 80 Gew% (Meth)acrylate und/oder mit (Meth)acrylaten copolymerisierbare Komponenten,
0 Gew% bis 20 Gew% Urethan(meth)acrylate,
10 Gew% bis 50 Gew% Poly(meth)acrylate und/oder Polyester, 0 Gew% bis 5 Gew% Amine,
0 Gew% bis 15 Gew% Kern-Schale Partikel enthaltend Polymethacrylate und
gegebenenfalls weitere Hilfsstoffe.

9. Verfahren gemäß mindestens einem der Ansprüche 1 bis 6, **dadurch gekennzeichnet, dass** die Kaltplastik folgende Komponenten aufweist:
5 Gew% bis 60 Gew% eines Reaktionsharzes gemäß einem der Ansprüche 4 oder 5,
0,15 Gew% bis 25 Gew% eines anorganischen Pigments und
10 Gew% bis 90 Gew% mineralische und/oder polymere Füllstoffe und
0 Gew% bis 5 Gew% Stabilisatoren und/oder Additive.

10. Verfahren gemäß Anspruch 7, **dadurch gekennzeichnet, dass** es sich bei dem anorganischen Pigments um Titandioxid handelt.

11. Apparatur zur Aushärtung eines applizierten Reaktionsharzes oder einer applizierten Kaltplastik, **dadurch gekennzeichnet, dass** der Apparat an einem Fahrzeug derart befestigt ist, dass in Richtung des Bodens ein Plasmastrahl erzeugt werden kann, und dass der Apparat mindestens folgende Komponenten aufweist: einen Hochspannungsgenerator (2), eine Gas- und Stromzuleitung in einem flexiblen Rohr (6), eine äußere potentialfreie Elektrode (7), einen Isolator (8), eine Zentralelektrode (10) und einen Gaskanal (9), der den Gasstrom an der Zentralelektrode vorbei führt, wobei die Elektroden (7) und (10) derart einen Lichtbogen (11) erzeugen, dass aus dem eingeleiteten Gas ein potentialfreier Plasmastrahl (13) gebildet wird.

12. Fahrzeug zur Applikation einer Straßenmarkierung, in Fahrtrichtung hintereinander aufweisend eine oder mehrere Düsen oder Rollen zur Applikation eines Reaktionsharzes oder einer Kaltplastik, eine oder mehrere optionale weitere Düsen oder Rollen zur Applikation von Glasperlen und/oder Einstreumitteln auf das zuvor applizierte Reaktionsharz oder die zuvor applizierte Kaltplastik und ein Apparat gemäß Anspruch 8 zur Initiierung der Aushärtung des applizierten Reaktionsharzes oder der applizierten Kaltplastik.

13. Verwendung des Verfahrens gemäß mindestens einem der Ansprüche 1 bis 10 zur Herstellung von langlebigen Fahrbahnmarkierungen.

## Claims

1. Process for the application and hardening of reactive resins or cold plastics, **characterized in that**
the reactive resin or the cold plastic comprises monomers and polymers, application is achieved by means of a brush, a nozzle, roller, doctor or trowel on an area in the form of film or flocculent materials, and then the hardening of the film or of the flocculent materials is initiated by irradiation with a plasma from a plasma source.

2. Process according to Claim 1, **characterized in that** the monomers are (meth)acrylates.

3. Process according to Claim 1 or 2, **characterized in that** between the application and the hardening glass beads and/or other particulate solids are applied to the surface of the film and, respectively, of the flocculent materials.

4. Process according to at least one of Claims 1 to 3, **characterized in that** the reactive resin or the cold plastic is free from peroxides and/or azoinitiators.

5. Process according to at least one of Claims 1 to 4, **characterized in that** the reactive resin or the cold plastic is free from accelerators.

6. Process according to at least one of Claims 1 to 5, **characterized in that** the reactive resin comprises at least one crosslinking agent.

7. Process according to at least one of Claims 1 to 6, **characterized in that**
the reactive resin has the following ingredients:
from 0% by weight to 30% by weight of crosslinking agents,
from 5% by weight to 97% by weight of monomers,
from 0% by weight to 20% by weight of urethane (meth)acrylates,
from 3% by weight to 70% by weight of prepolymers,
from 0% by weight to 5% by weight of accelerators,
from 0% by weight to 25% by weight of core-shell particles and
optionally further auxiliaries.

8. Process according to Claim 7, **characterized in that**
the reactive resin is halogen-free and that the reactive resin has the following ingredients:
from 20% by weight to 30% by weight of di-, tri- or tetramethacrylates,
from 30% by weight to 80% by weight of (meth)acrylates and/or components copolymerizable with (meth)acrylates,
from 0% by weight to 20% by weight of urethane (meth)acrylates,
from 10% by weight to 50% by weight of poly(meth)acrylates and/or polyesters,
from 0% by weight to 5% by weight of amines,
from 0% by weight to 15% by weight of core-shell particles comprising polymethacrylates and optionally further auxiliaries.

9. Process according to at least one of Claims 1 to 6, **characterized in that** the cold plastic has the following components:
from 5% by weight to 60% by weight of a reactive resin according to Claim 4 or 5,
from 0.15% by weight to 25% by weight of an inorganic pigment and
from 10% by weight to 90% by weight of mineral fillers and/or polymeric fillers and
from 0% by weight to 5% by weight of stabilizers and/or additives.

10. Process according to Claim 7, **characterized in that** the inorganic pigment is titanium dioxide.

11. Apparatus for the hardening of an applied reactive resin or of an applied cold plastic, **characterized in that** the apparatus has been secured on a vehicle in such a way that a plasma jet can be produced in the direction of the ground, and that the apparatus has at least the following components: a high-voltage generator (2), a gas- and electricity-supply line in a flexible tube (6), an exterior potential-free electrode (7), an insulator (8), a central electrode (10) and a gas duct (9) which conducts the gas stream past the central electrode, where the electrodes (7) and (10) produce an arc (11) in a manner such that a potential-free plasma jet (13) is formed from the gas introduced.

12. Vehicle for the application of a road marking, having, in sequencing direction of travel, one or more nozzles or rollers for the application of a reactive resin or of a cold plastic, one or more optional further nozzles or rollers for the application of glass beads and/or particulate solids to the previously applied reactive resin or the previously applied cold plastic and an apparatus according to Claim 8 for the initiation of the hardening of the applied reactive resin or of the applied cold plastic.

13. Use of the process according to at least one of Claims 1 to 10 for the production of durable trafficway markings.

## Revendications

1. Procédé d'application et de durcissement de résines réactives ou de plastiques à froid, **caractérisé en ce que** la résine réactive ou le plastique à froid contient des monomères et des polymères, est appliqué au moyen d'un pinceau, d'une buse, d'un rouleau, d'une racle ou d'une spatule sur une surface sous la forme d'un film ou de flocons, puis le durcissement du film ou des flocons est initié par exposition à un plasma à partir d'une source de plasma.

2. Procédé selon la revendication 1, **caractérisé en ce que** les monomères sont des (méth)acrylates.

3. Procédé selon la revendication 1 ou 2, **caractérisé en ce que** des perles de verre ou d'autres agents d'épandage sont appliqués sur la surface du film ou des flocons entre l'application et le durcissement.

4. Procédé selon au moins l'une quelconque des revendications 1 à 3, **caractérisé en ce que** la résine réactive ou le plastique à froid est exempt de peroxydes et/ou d'initiateurs azo.

5. Procédé selon au moins l'une quelconque des revendications 1 à 4, **caractérisé en ce que** la résine réactive ou le plastique à froid est exempt d'accélérateurs.

6. Procédé selon au moins l'une quelconque des revendications 1 à 5, **caractérisé en ce que** la résine réactive contient au moins un agent de réticulation.

7. Procédé selon au moins l'une quelconque des revendications 1 à 6, **caractérisé en ce que** la résine réactive comprend les constituants suivants :
0 % en poids à 30 % en poids d'agents de réticulation,
5 % en poids à 97 % en poids de monomères,
0 % en poids à 20 % en poids de (méth)acrylates d'uréthane,
3 % en poids à 70 % en poids de prépolymères,
0 % en poids à 5 % en poids d'accélérateurs,
0 % en poids à 25 % en poids de particules noyau-enveloppe, et
éventuellement d'autres adjuvants.

8. Procédé selon la revendication 7, **caractérisé en ce que** la résine réactive est sans halogène, et **en ce que** la résine réactive comprend les constituants suivants :
20 % en poids à 30 % en poids de di-, tri- ou tétraméthacrylates,
30 % en poids à 80 % en poids de (méth)acrylates et/ou de composants copolymérisables avec les (méth)acrylates, 0 % en poids à 20 % en poids de (méth)acrylates d'uréthane,
10 % en poids à 50 % en poids de poly(méth)acrylates et/ou de polyesters,
0 % en poids à 5 % en poids d'amines,
0 % en poids à 15 % en poids de particules noyau-enveloppe contenant
des polyméthacrylates et
éventuellement d'autres adjuvants.

9. Procédé selon au moins l'une quelconque des revendications 1 à 6, **caractérisé en ce que** le plastique à froid comprend les composants suivants :
5 % en poids à 60 % en poids d'une résine réactive selon l'une quelconque des revendications 4 ou 5,
0,15 % en poids à 25 % en poids d'un pigment inorganique et
10 % en poids à 90 % en poids de charges minérales et/ou polymères, et
0 % en poids à 5 % en poids de stabilisateurs et/ou d'additifs.

10. Procédé selon la revendication 7, **caractérisé en ce que** le pigment inorganique est du dioxyde de titane.

11. Appareil pour le durcissement d'une résine réactive appliquée ou d'un plastique à froid appliqué, **caractérisé en ce que** l'appareil est fixé à un véhicule de sorte qu'un faisceau de plasma puisse être généré dans la direction du sol et **en ce que** l'appareil comprend au moins les composants suivants : un générateur haute tension (2), une conduite d'alimentation de gaz et de courant dans un tube flexible (6), une électrode extérieure sans potentiel (7), un isolateur (8), une électrode centrale (10) et un canal de gaz (9), qui conduit le courant de gaz devant l'électrode centrale, les électrodes (7) et (10) formant un arc électrique (11), de sorte qu'un faisceau de plasma sans potentiel (13) soit formé à partir du gaz introduit.

12. Véhicule pour l'application d'un marquage routier, comprenant successivement, dans la direction du déplacement, une ou plusieurs buses ou un ou plusieurs rouleaux pour l'application d'une résine réactive ou d'un plastique à froid, une ou plusieurs buses ou un ou plusieurs rouleaux supplémentaires éventuels pour l'application de perles de verre et/ou d'agents d'épandage sur la résine réactive appliquée auparavant ou le plastique à froid appliqué auparavant, et un appareil selon la revendication 8 pour initier le durcissement de la résine réactive appliquée ou du plastique à froid appliqué.

13. Utilisation du procédé selon au moins l'une quelconque des revendications 1 à 10 pour la fabrication de marquages routiers durables.
